# EUROPÄISCHE PATENTSCHRIFT

(11) **EP 0 966 914 B1**
(45) Veröffentlichungstag und Bekanntmachung des Hinweises auf die Patenterteilung: **19.11.2003**
(21) Anmeldenummer: 99111346.5
(22) Anmeldetag: 10.06.1999
(51) Int. Cl.: A47L 15/42, D06F 39/00, C02F 1/42

(54) **Verfahren und wasserführendes Haushaltsgerät zur Wasserenthärtung**
Process and domestic appliance for water softening
Procédé et appareil ménager pour l'adoucissement de l'eau

(30) Priorität: 10.06.1998 DE 19825981
(43) Veröffentlichungstag der Anmeldung: 29.12.1999
(73) Patentinhaber: BSH Bosch und Siemens Hausgeräte GmbH, 81669 München (DE)
(72) Erfinder: Stickel, Ernst, Dipl.-Ing., 89537 Giengen (DE); Eiermann, Rüdiger, Dipl.-Ing., 89428 Staufen (DE); Rosenbauer, Michael, Dipl.-Ing., 86756 Reimlingen (DE)

(56) Entgegenhaltungen:
- EP-A- 0 425 815
- EP-A- 0 517 205
- DE-A- 3 533 098
- DE-A- 19 638 514
- DE-A- 19 721 976
- PATENT ABSTRACTS OF JAPAN vol. 006, no. 069 (M-125), 30. April 1982 (1982-04-30) -& JP 57 009378 A (MATSUSHITA ELECTRIC IND CO LTD), 18. Januar 1982 (1982-01-18)

## Beschreibung

Die Erfindung betrifft ein Verfahren zur Wasserenthärtung in einem wasserführenden Haushaltsgerät gemäß dem Oberbegriff des Patentanspruchs 1, sowie ein entsprechendes wasserführendes Haushaltsgerät gemäß dem Oberbegriff des Patentanspruchs 11.

Aus der deutschen Offenlegungsschrift 41 18 586 ist ein Verfahren zur Enthärtung des einfließenden Leitungswassers in einem wasserführenden Haushaltsgerät, insbesondere einer Geschirrspülmaschine, bekannt. Dabei kann ein Ionenaustauscher während eines Teilprogramms des üblicherweise programmgesteuerten Haushaltsgeräts durch Zugabe einer Menge Sole (Regeneriersalzlösung) regeneriert werden. Ein derartiger Regeneriervorgang wird durchgeführt, da sich die Austauschkapazität des lonenaustauschers mit zunehmender Anzahl von Spülvorgängen, die jeweils während eines anderen Teilprogramms erfolgen, erschöpft. Zur Wasserenthärtung sind in dem Haushaltsgerät neben dem lonenaustauscher ein Solebehälter und ein Regenerierbehälter angeordnet. Gegenüber der üblichen Vorgehensweise der Regenerierung bei jedem Spülvorgang ist in der Offenlegungsschrift eine Lösung angegeben, die eine bedarfsabhängige Auslösung des Regeneriervorgangs auf Grund des durch den lonenaustauscher geleiteten Wasservolumens und der voreingestellten Härte des eingeleiteten Wassers vorschlägt.

In EP 0 425 815 A wird die Wasserhärte durch einen allgemein bekannten Sensor erfaßt und dadurch die Durchführung des Regeneriervorgangs ausgelöst.

Es ist Aufgabe der vorliegenden Erfindung, ein Verfahren und ein wasserführendes Haushaltsgerät anzugeben, das eine wirtschaftliche Wasserenthärtung ermöglicht.

Diese Aufgabe wird gemäß der Erfindung durch die Merkmale des Patentanspruchs 1 hinsichtlich des Verfahrens und durch die Merkmale des Patentanspruchs 11 hinsichtlich des Haushaltsgeräts gelöst. Weiterbildungen der Erfindung sind in den abhängigen Ansprüchen angegeben.

Ausgehend von dem Regeneriervorgang, bei dem ein lonenaustauscher durch Zugabe der Solemenge regeneriert wird, wird gemäß dem Gegenstand der Erfindung eine Veränderung der Wasserhärte anhand von Kalkablagerungen an einer lichtdurchlässigen Fläche von einem Sensor mit einem optische Signale aussendenden Element und einem optische Signale empfangenden Element gemessen und ein Zeitpunkt zur Durchführung des Regeneriervorgangs in Abhängigkeit der gemessenen Kalkablagerungen bestimmt. Dies bedeutet, daß der Regeneriervorgang nicht mehr an den Spülvorgang während jedes Teilprogramms gebunden ist, sondern nur noch nach vorheriger Auswertung des Verkalkungsgrads anhand der gemessenen Kalkablagerungen ausgelöst wird. Die Veränderung der Wasserhärte spiegelt sich in den Kalkablagerungen wider, die wegen der lichtdurchlässigen Fläche mit einer im Vergleich zu üblichen Meßmethoden hohen Meßgenauigkeit von dem Sensor mit den optischen Sende- und Empfangselementen besonders einfach und wirtschaftlich erfaßt werden können. Durch die bedarfsabhängige Bestimmung des Regeneriervorgangszeitpunkts abhängig vom gemessenen Verkalkungsgrad an der lichtdurchlässigen Fläche gemäß der Erfindung lassen sich die Solemenge sowie die Wassermenge zum Regenerieren und Durchspülen reduzieren.

Gemäß einer Weiterbildung der Erfindung wird ein Lichtstrahl von einem Sendeelement des Sensors in die lichtdurchlässige Fläche ausgesendet und der von der lichtdurchlässigen Fläche austretende Lichtstrahl von einem Empfangselement des Sensors gemessen. Die Verwendung eines Sensors mit optischen Bauelementen zur Messung der Kalkablagerungen anhand eines Lichtstrahls ermöglicht auf besonders einfache und wirtschaftliche Weise das Erkennen einer erhöhten Wasserhärte. Insbesondere bei Anwendung eines Trübungssensors, der bekanntlich gute Meßeigenschaften zur Bestimmung der Trübung einer Wasch- oder Spüllauge aufweist und als Prozeßparameter zur Optimierung des Programmablaufs eingesetzt ist, zusätzlich zur Messung der Kalkablagerungen ergibt sich eine besonders aufwandsarme, kostengünstige und effektive Methode zur Regenerierungssteuerung für die Wasserenthärtung.

Vorzugsweise wird gemäß einer anderen Weiterbildung der Erfindung ein Wert für die gemessenen Kalkablagerungen ermittelt und mit einem vorgebbaren Sollwert verglichen, bei dessen Erreichen der Regeneriervorgang durchgeführt wird. Dabei hat es sich als günstig erwiesen, einen Grenzwert oder einen Kalibrierwert als Sollwert für den Vergleich zu verwenden.

Weiterhin ist es von Vorteil, wenn die lichtdurchlässige Fläche von einer Glasfläche aus Klarglas oder Plexiglas gebildet wird, wobei parallel angeordnete Glasplatten eine für die Messung der Kalkablagerungen besonders effektive Lösung darstellen. Gemäß einer bevorzugten Ausgestaltung sind die parallel angeordneten Glasplatten miteinander verbunden, so daß sich ein stabiler Glasblock ergibt. Die vorzugsweise als Glasfläche ausgebildete lichtdurchlässige Fläche bildet mit den eingangsseitig und ausgangsseitig angeordneten beiden optischen Elementen des Sensors eine Kaskadenschaltung, durch die der Verkalkungsgrad frühzeitig, effektiv und wirtschaftlich meßbar ist.

Gemäß weiterer vorteilhafter Ausgestaltungen der Erfindung wird nach dem Regeneriervorgang in einem Spülvorgang überprüft, ob der Verkalkungsgrad sich verbessert hat, und für den Fall eines nicht verbesserten Verkalkungsgrads der Mangel an Solemenge am wasserführenden Haushaltsgerät angezeigt. Dies bedeutet, daß die Regenerierung unabhängig von dem Programmablauf durchgeführt werden kann. Zur Überprüfung, ob die Zugabe der Solemenge erfolgt ist, kann vorzugsweise ein Regeneriervorgang regelmäßig durchgeführt werden. Damit sind die Spülvorgänge und damit die Qualität des Verkalkungsgrads bei erneuter Regenerierung wiederholt kontrollierbar.

Anhand der Zeichnung wird ein Ausführungsbeispiel der Erfindung näher erläutert. Im einzelnen zeigen
- FIG 1: ein Blockschaltbild zur Wasserenthärtung in einem wasserführenden Haushaltsgerät am Beispiel einer Geschirrspülmaschine, und
- FIG 2: ein Ablaufdiagramm für die Steuerung der Wasserenthärtung.

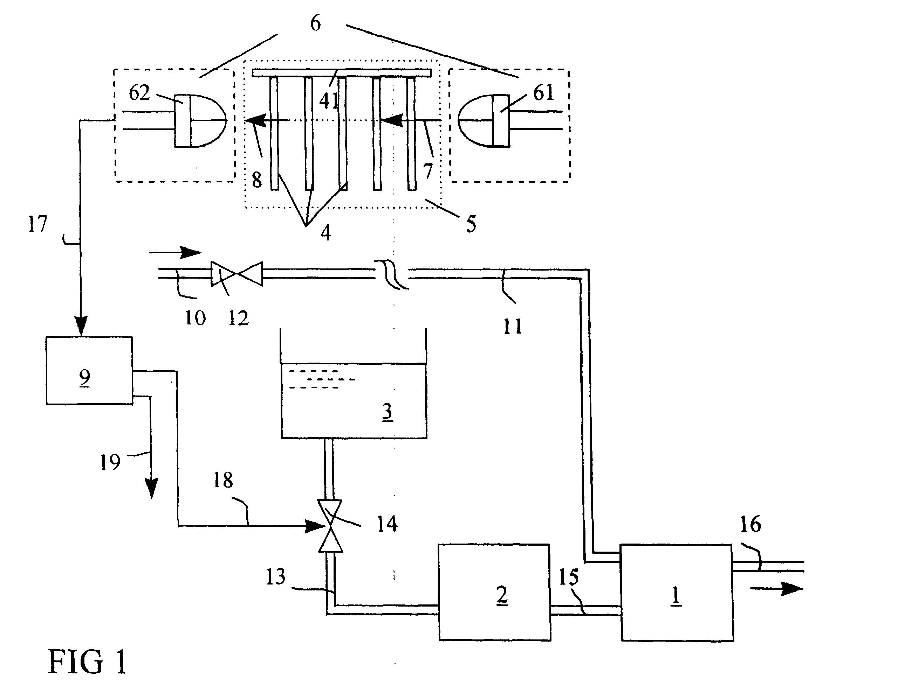

FIG 1 zeigt in einem Blockschaltbild die für die Wasserenthärtung erforderlichen Einrichtungen am Beispiel einer Geschirrspülmaschine als wasserführendes Haushaltsgerät. Eine Enthärtungseinrichtung weist einen lonenaustauscher 1 - ausgebildet als Ionentauscherbehälter mit einem begrenzten Aufnahmevolumen - , einen Solebehälter 2 mit einer Menge an gesättigter Sole (Regeneriersalzlösung), einen Regenerierbehälter 3 mit einem vorgebbaren Wasserinhalt und ein steuerbares Regenerierventil 14 - zwischen Regenerierbehälter 3 und Solebehälter 2 angeordnet - auf. Die Enthärtungseinrichtung ist an ein Wasserleitungsnetz 10 angeschlossen, durch das Wasser über ein steuerbares Einlaßventil 12 im geöffneten Zustand eingespeist werden kann. Zum Regenerieren des Ionenaustauschers 1 während eines Regeneriervorgangs strömt bei geschlossenem Einlaßventil 12 der Inhalt des Regenerierbehälters 3 durch das geöffnete Regenerierventil 14 in einer Leitung 13 in den Solebehälter 2 und schiebt eine bestimmte Solemenge in einer Leitung 15 in den lonenaustauscher 1. Aus dem lonentauscherbehälter an seiner Oberkante auslaufendes Wasser fließt durch die Leitung 16 in den Spülbehälter der Geschirrspülmaschine. Das Regenerierventil 14 wird geschlossen. Nach einer bestimmten Zeit, wenn die Sole auf die Ionenaustauschermasse gemäß dem Regeneriervorgang eingewirkt hat, wird das Einlaßventil 12 geöffnet und die verbrauchte Sole durch Zuführung einer Frischwassermenge in einer Leitung 11 aus dem regenerierten lonenaustauscher 1 über die Leitung 16 ausgespült.

Der Regeneriervorgang erfolgt nicht bei oder nach jedem Spülvorgang, sondern gemäß der Erfindung bedarfsabhängig je nach gemessenem Verkalkungsgrad, der mit der Anzahl der Spülvorgänge zunimmt. Die bei einer Veränderung, d.h. Zunahme der Wasserhärte sich ergebenden Kalkablagerungen werden an einer lichtdurchlässigen Fläche 5 von einem Sensor 6 mit einem optische Signale aussendenden Element 61 und einem optische Signale empfangenden Element 62 gemessen. Der als Verkalkungssensor arbeitende Sensor 6 weist vorzugsweise eine Infrarot-Sendediode als Sendeelement 61 auf, die einen Lichtstrahl 7 im Infrarot-Bereich in die lichtdurchlässige Fläche 5 aussendet. Weiterhin weist der Verkalkungssensor einen Fototransistor als Empfangselement 62 auf, der den von der lichtdurchlässigen Fläche 5 austretenden Lichtstrahl 8 mißt. Vorzugsweise wird die Intensität des von der Fläche 5 abgegebenen Lichtstrahls 8 vom Fototransistor ermittelt.

Die lichtdurchlässige Fläche 5 ist vorzugsweise als Glasfläche ausgebildet, die parallel angeordnete Glasplatten 4 aufweist. Zur Herstellung eines kompakten Glasblocks sind die Glasplatten 4 an ihrer Oberseite durch eine stegartige Querplatte 41 miteinander fest verbunden. Die Zunahme der Wasserhärte spiegelt sich in den Kalkablagerungen auf den Glasplatten 4, die aus Klarglas oder aus Plexiglas bestehen können, wider und kann durch die opto-elektronischen Bauelemente 61, 62 des Sensors 6 gemessen werden. Die Anordnung der Bauelemente des Sensors sowie die Gestaltung des Glasblocks können abhängig von dem Befestigungspunkt im Spülbehälter der Geschirrspülmaschine unterschiedlich ausfallen. Unabhängig von der jeweiligen Ausgestaltung sind Bauelemente und Glasblock vorzugsweise als Kaskadenschaltung anzuordnen.

Das Empfangselement 62 liefert ein Meßsignal 17, das einer Steuereinheit 9 zugeführt wird. Die Steuereinheit 8 ermittelt aus dem Meßsignal 17 einen Wert für die gemessenen Kalkablagerungen und vergleicht ihn mit einem vorgebbaren Sollwert, der der Steuereinheit 9 bekannt ist. Vorzugsweise besteht der Sollwert aus einem Grenzwert oder einem Kalibrierwert, bei dessen Erreichen der Regeneriervorgang ausgelöst werden soll. Der Grenzwert oder Kalibrierwert wird dabei derart voreingestellt, daß die Regenerierung des lonenaustauschers 1 durchgeführt wird, bevor Kalkablagerungen am Geschirr sichtbar oder fühlbar wahrzunehmen sind. Die Durchführung des Regeneriervorgangs erfolgt daher zu einem Zeitpunkt, der in Abhängigkeit der vom Verkalkungssensor gemessenen Kalkablagerungen an der lichtdurchlässigen Fläche 5 bestimmt wird. Vorzugsweise ermittelt die Steuereinheit 9 diesen Zeitpunkt und erzeugt ein Steuersignal 18, das im vorliegenden Beispiel auf das Regenerierventil 14 wirkt und zum Starten des Regeneriervorgangs dessen Öffnen veranlaßt.

Da die Regenerierung der lonenaustauschermasse im lonentauscherbehälter unabhängig vom Solevorrat gesteuert wird, ist in dem folgenden Spülvorgang - beispielsweise von der Steuereinheit 9 anhand des gemessenen Verkalkungsgrads - zu überprüfen, ob das Spülergebnis sich verbessert hat. Ist dies nicht der Fall, kann davon ausgegangen werden, daß der Solebehälter 2 leer war. Daher erzeugt die Steuereinheit 9 ein Steuersignal 19 zur Solemangelanzeige am wasserführenden Haushaltsgerät und sendet es zu der dafür vorgesehenen Anzeigeeinheit. Auch das Blockieren eines weiteren Spülvorgangs kann über ein entsprechendes Steuersignal von der Steuereinheit 9 veranlaßt werden. Zur Überprüfung, ob die Zugabe einer Solemenge erfolgt ist, wird ein Regeneriervorgang regelmäßig durchgeführt. Eine Verschlechterung des Verkalkungsgrads am Verkalkungssensor ist erst nach mehreren Spülvorgängen bei erfolgloser Regenerierung erkennbar.

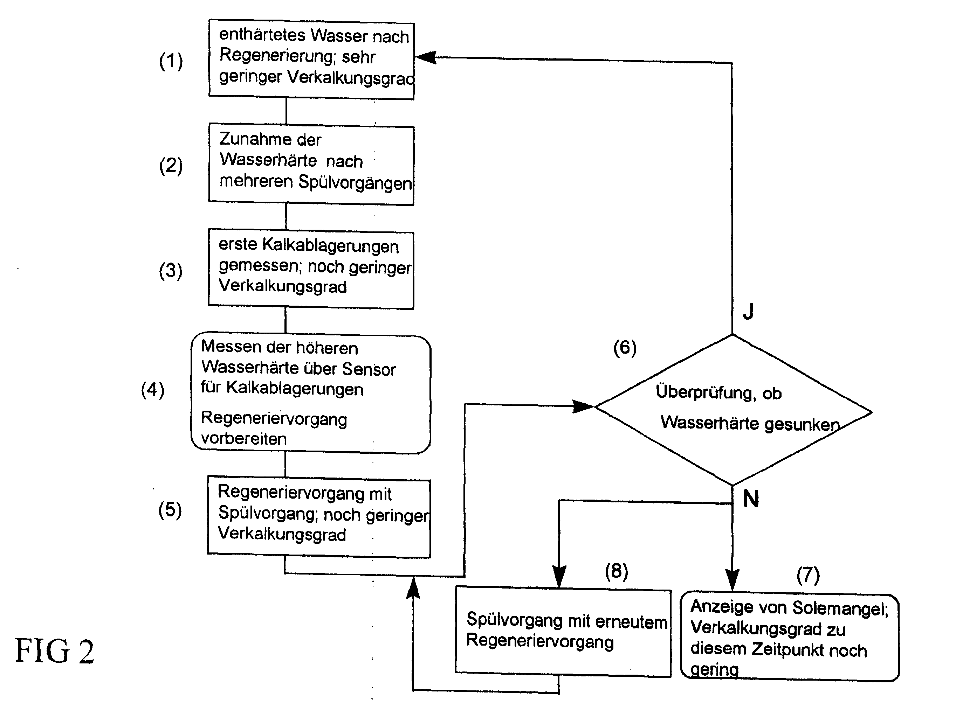

FIG 2 zeigt ein Ablaufdiagramm zur Steuerung der Wasserenthärtung. Nach einem ausgeführten Regeneriervorgang wird wegen des enthärteten Wassers ein sehr geringer Verkalkungsgrad bei einem Spülvorgang festgestellt (1). Danach nimmt die Wasserhärte mit der Anzahl der durchgeführten Spülvorgänge zu (2). Erste Kalkablagerungen werden vom Verkalkungssensor nach dem Verfahren gemäß der Erfindung auf der lichtdurchlässigen Fläche gemessen. Es liegt jedoch noch ein geringer Verkalkungsgrad vor, so daß die Steuereinheit des Geschirrspülers den Zeitpunkt für die Durchführung eines erneuten Regeneriervorgangs noch verschiebt (3). Erkennt sie - beispielsweise nach dem nächstfolgenden Spülvorgang - eine weitere Zunahme der Wasserhärte anhand der vom Verkalkungssensor gemessenen Kalkablagerungen, bereitet sie den Regeneriervorgang durch Bestimmung des entsprechenden Zeitpunkts - an dem sie das Steuersignal gemäß FIG 1 für das Öffnen des Regenerierventils auslöst - vor (4). Es folgen der Regeneriervorgang gemäß der Beschreibung zu FIG 1 und der Spülvorgang, der einen geringen Verkalkungsgrad nach sich zieht (5).

Eine Überprüfung der Wasserhärte in demselben Spülvorgang oder in dem darauffolgenden Spülvorgang - gemäß Schritt (6) - bewirkt, daß bei verminderter Härte der Regeneriervorgang erfolgreich war und der Steuerungsablauf bei Schritt (1) fortgesetzt werden kann. ist hingegen die Härte gestiegen, folgt die Solemangelanzeige wegen nicht erfolgreicher Regenerierung auf Grund nicht vorhandener oder zu geringer Regeneriersalzlösung. Der Verkalkungsgrad ist zu diesem Zeitpunkt noch gering (7). Vorzugsweise wird die Mangelanzeige immer bei erstmaliger Überprüfung der Wasserhärte im Steuerungsablauf ausgelöst. Parallel dazu oder anschließend einem weiteren Spülvorgang kann erneut der Regeneriervorgang initiiert (8) und danach im Steuerungsablauf wieder zur Überprüfung der Wasserhärte gemäß Schritt (6) verzweigt werden.

## Patentansprüche

1. Verfahren zur Wasserenthärtung in einem programmgesteuerten wasserführenden Haushaltsgerät, in dem während eines Teilprogramms ein Regeneriervorgang für einen lonenaustauscher (1) durch Zugabe einer Solemenge und während eines weiteren Teilprogramms ein Spülvorgang durchgeführt wird,
- wobei eine Veränderung der Wasserhärte anhand von Kalkablagerungen an einer lichtdurchlässigen Fläche (5) von einem Sensor (6) mit einem optische Signale aussendenden Element (61) und einem optische Signale empfangenden Element (62) gemessen wird, und
- wobei ein Zeitpunkt zur Durchführung des Regeneriervorgangs in Abhängigkeit der gemessenen Kalkablagerungen bestimmt wird.

2. Verfahren nach Anspruch 1, **dadurch gekennzeichnet, daß** ein Lichtstrahl (7) von einem Sendeelement (61) des Sensors (6) in die lichtdurchlässige Fläche (5) ausgesendet und der von der lichtdurchlässigen Fläche (5) austretende Lichtstrahl (8) von einem Empfangselement (62) des Sensors (6) gemessen wird.

3. Verfahren nach Anspruch 1 oder 2, **dadurch gekennzeichnet, daß** ein Wert für die gemessenen Kalkablagerungen ermittelt und mit einem vorgebbaren Sollwert verglichen wird, bei dessen Erreichen der Regeneriervorgang durchgeführt wird.

4. Verfahren nach Anspruch 3, **dadurch gekennzeichnet, daß** als Sollwert ein Grenzwert oder ein Kalibrierwert verwendet wird.

5. Verfahren nach einem der vorhergehenden Ansprüche, **dadurch gekennzeichnet, daß** die lichtdurchlässige Fläche (5) von einer Glasfläche aus Klarglas oder Plexiglas gebildet wird.

6. Verfahren nach einem der vorhergehenden Ansprüche, **dadurch gekennzeichnet, daß** die lichtdurchlässige Fläche (5) von parallel angeordneten Glasplatten (4) gebildet wird.

7. Verfahren nach Anspruch 6, **dadurch gekennzeichnet, daß** die parallel angeordneten Glasplatten (4) miteinander verbunden werden.

8. Verfahren nach einem der vorhergehenden Ansprüche, **dadurch gekennzeichnet, daß** nach dem Regeneriervorgang in einem Spülvorgang überprüft wird, ob der Verkalkungsgrad sich verbessert hat.

9. Verfahren nach Anspruch 8, **dadurch gekennzeichnet, daß** bei nicht verbessertem Verkalkungsgrad ein Mangel an Solemenge am wasserführenden Haushaltsgerät angezeigt oder ein weiterer Spülvorgang blockiert wird.

10. Verfahren nach einem der vorhergehenden Ansprüche, **dadurch gekennzeichnet, daß** zur Überprüfung, ob die Zugabe der Solemenge erfolgt ist, ein Regeneriervorgang regelmäßig durchgeführt wird.

11. Wasserführendes Haushaltsgerät zur Wasserenthärtung, mit einem Ionenaustauscher (1), einem Solebehälter (2) und einem Regenerierbehälter (3), wobei während eines Teilprogramms ein Regeneriervorgang für den Ionenaustauscher (1) durch Zugabe einer Solemenge und während eines weiteren Teilprogramms ein Spülvorgang durchführbar ist, wobei das wasserführende Haushaltsgerät außerdem umfaßt:
- eine lichtdurchlässige Fläche (5),
- einen Sensor (6) mit einem optische Signale aussendenden Element (61) und einem optische Signale empfangenden Element (62) zur Messung einer Veränderung der Wasserhärte anhand von Kalkablagerungen an der lichtdurchlässigen Fläche (5), und
- eine Steuereinheit (9) zur Bestimmung eines Zeitpunkts zur Durchführung des Regeneriervorgangs in Abhängigkeit der gemessenen Kalkablagerungen.

12. Wasserführendes Haushaltsgerät nach Anspruch 11, **dadurch gekennzeichnet, daß** die lichtdurchlässige Fläche (5) von einer Glasfläche aus Klarglas oder Plexiglas gebildet ist.

13. Wasserführendes Haushaltsgerät nach Anspruch 11 oder 12, **dadurch gekennzeichnet, daß** die lichtdurchlässige Fläche (5) von parallel angeordneten Glasplatten (4) gebildet ist.

14. Wasserführendes Haushaltsgerät nach Anspruch 13, **dadurch gekennzeichnet, daß** die parallel angeordneten Glasplatten (4) miteinander verbunden sind.

15. Wasserführendes Haushaltsgerät nach einem der Ansprüche 11 bis 14, **dadurch gekennzeichnet, daß** die Steuereinheit (9) einen Wert für die gemessenen Kalkablagerungen ermittelt und mit einem vorgebbaren Sollwert vergleicht, bei dessen Erreichen sie die Durchführung des Regeneriervorgangs auslöst.

16. Wasserführendes Haushaltsgerät nach einem der Ansprüche 11 bis 15, **dadurch gekennzeichnet, daß** es als Geschirrspülmaschine ausgebildet ist.

## Claims

1. Method of water softening in a program-controlled water-conducting domestic appliance, in which a regeneration process for an ion exchanger (1) is carried out during a part program by addition of a quantity of brine and a rinsing process is carried out during a further part program, wherein a change in water hardness is measured on the basis of lime deposits at a light-permeable surface (5) by a sensor (6) with an element (61) emitting optical signals and an element (62) receiving optical signals, and wherein an instant in time for carrying out the regeneration process is determined in dependence on the measured lime deposits.

2. Method according to claim 1, **characterised in that** a light beam (7) is emitted by a transmitting element (61) of the sensor (6) into the light-permeable surface (5) and the light beam (8) issuing from the light-permeable surface (5) is measured by a receiving element (62) of the sensor (6).

3. Method according to claim 1 or 2, **characterised in that** a value for the measured lime deposits is ascertained and compared with a predeterminable target value, on attainment of which the regeneration process is carried out.

4. Method according to claim 3, **characterised in that** a limit value or a calibration value is used as target value.

5. Method according to one of the preceding claims, **characterised in that** the light-permeable surface (5) is formed by a glass surface of clear glass or Plexiglas.

6. Method according to one of the preceding claims, **characterised in that** the light-permeable surface (5) is formed by glass plates (4) arranged in parallel.

7. Method according to claims 6, **characterised in that** the glass plates (4) arranged in parallel are connected together.

8. Method according to one of the preceding claims, **characterised in that** after the regeneration process it is checked in a rinsing process whether the degree of calcification has improved.

9. Method according to claim 8, **characterised in that** in the case of an unimproved degree of calcification a deficiency in brine quantity is indicated at the water-conducting domestic appliance or a further rinsing process is blocked.

10. Method according to one of the preceding claims, **characterised in that** for checking whether the addition of the brine quantity has taken place a regeneration process is carried out regularly.

11. Water-conducting domestic appliance for water softening, comprising an ion exchanger (1), a brine container (2) and a regeneration container (3), wherein during a part program a regeneration process for the ion exchanger (1) can be carried out by addition of a quantity of brine and during a further part program a rinsing process can be carried out, wherein the water-conducting domestic appliance additionally comprises:
- a light-permeable surface (5),
- a sensor (6) with an element (61) emitting optical signals and an element (62) receiving optical signals for measurement of a change in water hardness on the basis of lime deposits at the light-permeable surface (5), and
- a control unit (9) for determination of an instant in time for carrying out the regeneration process in dependence on the measured lime deposits.

12. Water-conducting domestic appliance according to claim 11, **characterised in that** the light-permeable surface (5) is formed by a glass surface of clear glass or Plexiglas.

13. Water-conducting domestic appliance according to claim 11 or 12, **characterised in that** the light-permeable surface (5) is formed by glass plates (4) arranged in parallel.

14. Water-conducting domestic appliance according to claim 13, **characterised in that** the glass plates (4) arranged in parallel are connected together.

15. Water-conducting domestic appliance according to one of claims 11 to 14, **characterised in that** the control unit (9) ascertains a value for the measured lime deposits and compares it with a predeterminable target value, on the basis of which it triggers performance of the regeneration process.

16. Water-conducting domestic appliance according to one of claims 11 to 15, **characterised in that** it is constructed as a dishwashing machine.

## Revendications

1. Procédé pour l'adoucissement de l'eau dans un appareil ménager utilisant de l'eau et commandé par programme, dans lequel une opération de régénération est exécutée pour un échangeur d'ions (1) pendant un sous-programme par adjonction d'une quantité de saumure et une opération de lavage est exécutée pendant un autre sous-programme,
- une modification de la dureté de l'eau étant mesurée sur la base de dépôts calcaires au niveau d'une surface perméable à la lumière (5) par un capteur (6) comprenant un élément (61) qui émet des signaux optiques et un élément (62) qui reçoit des signaux optiques et
- un moment étant déterminé pour l'exécution de l'opération de régénération en dépendance des dépôts calcaires mesurés.

2. Procédé selon la revendication 1, **caractérisé en ce qu'**un rayon de lumière (7) est envoyé par un élément émetteur (61) du capteur (6) dans la surface perméable à la lumière (5) et **en ce que** le rayon de lumière (8) sortant de ladite surface perméable à la lumière (5) est mesuré par un élément récepteur (62) du capteur (6).

3. Procédé selon la revendication 1 ou 2, **caractérisé en ce qu'**une valeur est déterminée pour les dépôts calcaires mesurés et comparée avec une valeur théorique prédéterminable à l'obtention de laquelle l'opération de régénération est exécutée.

4. Procédé selon la revendication 3, **caractérisé en ce qu'**une valeur limite ou une valeur de calibrage est utilisée en tant que valeur théorique.

5. Procédé selon l'une des revendications précédentes, **caractérisé en ce que** la surface perméable à la lumière (5) est constituée par une surface de verre en verre clair ou en plexiglas.

6. Procédé selon l'une des revendications précédentes, **caractérisé en ce que** la surface perméable à la lumière (5) est constituée par des plaques de verre (4) placées parallèlement.

7. Procédé selon la revendication 6, **caractérisé en ce que** les plaques de verre (4) placées parallèlement sont assemblées l'une avec l'autre.

8. Procédé selon l'une des revendications précédentes, **caractérisé en ce qu'**il est contrôlé, après l'opération de régénération et dans une opération de lavage, si le degré d'entartrage calcaire s'est amélioré.

9. Procédé selon la revendication 8, **caractérisé en ce que**, si le degré d'entartrage calcaire ne s'est pas amélioré, il est indiqué au niveau de l'appareil ménager utilisant de l'eau que la quantité de saumure est insuffisante ou une autre opération de lavage est bloquée.

10. Procédé selon l'une des revendications précédentes, **caractérisé en ce que**, pour contrôler si la quantité de saumure a été ajoutée, il est procédé régulièrement à une opération de régénération.

11. Appareil ménager utilisant de l'eau, pour l'adoucissement de l'eau, comprenant un échangeur d'ions (1), un récipient de saumure (2) et un récipient de régénération (3), une opération de régénération pouvant être exécutée pour l'échangeur d'ions (1) pendant un sous-programme par adjonction d'une quantité de saumure et une opération de lavage pouvant être exécutée pendant un autre sous-programme, l'appareil ménager utilisant de l'eau comprenant en outre:
- une surface perméable à la lumière (5),
- un capteur (6) comprenant un élément (61) qui émet des signaux optiques et un élément (62) qui reçoit des signaux optiques pour mesurer une modification de la dureté de l'eau sur la base de dépôts calcaires au niveau de la surface perméable à la lumière (5) et
- une unité de commande (9) pour déterminer un moment pour l'exécution de l'opération de régénération en dépendance des dépôts calcaires mesurés.

12. Appareil ménager utilisant de l'eau, selon la revendication 11, **caractérisé en ce que** la surface perméable à la lumière (5) est constituée par une surface de verre en verre clair ou en plexiglas.

13. Appareil ménager utilisant de l'eau, selon la revendication 11 ou 12, **caractérisé en ce que** la surface perméable à la lumière (5) est constituée par des plaques de verre (4) placées parallèlement.

14. Appareil ménager utilisant de l'eau, selon la revendication 13, **caractérisé en ce que** les plaques de verre (4) placées parallèlement sont assemblées l'une avec l'autre.

15. Appareil ménager utilisant de l'eau, selon l'une des revendications 11 à 14, **caractérisé en ce que** l'unité de commande (9) détermine une valeur pour l'entartrage calcaire mesuré et la compare avec une valeur théorique prédéterminable à l'obtention de laquelle elle déclenche l'exécution de l'opération de régénération.

16. Appareil ménager utilisant de l'eau, selon l'une des revendications 11 à 15, **caractérisé en ce qu'**il est réalisé sous la forme d'un lave-vaisselle.
